(19) Europäisches Patentamt
European Patent Office
Office européen des brevets

(11) Publication number: 0 233 684 A1

(12) # EUROPEAN PATENT APPLICATION

(21) Application number: 87300105.1

(22) Date of filing: 07.01.87

(51) Int.Cl.[3]: B 01 F 17/00
C 09 D 17/00

(30) Priority: 30.01.86 GB 8602333

(43) Date of publication of application: 26.08.87 Bulletin 87/35

(84) Designated Contracting States: AT BE DE ES FR GB IT NL SE

(71) Applicant: IMPERIAL CHEMICAL INDUSTRIES PLC
Imperial Chemical House Millbank
London SW1P 3JF(GB)

(72) Inventor: Schofield, John David
Old Oak House 482 Holcombe Road Greenmont
Bury Lancashire BL8 4HB(GB)

(74) Representative: Pugsley, Roger Graham et al,
IMPERIAL CHEMICAL INDUSTRIES PLC Legal
Department: Patents PO Box 6 Bessemer Road
Welwyn Garden City Herts, AL7 1HD(GB)

(54) **Dispersing agent.**

(57) An ester or polyester having (i) a terminal group containing at least two aliphatic carbon-carbon double bonds and (ii) an acidic or basic ammino group which is suitable for use as a dispersant for solids in organic liquids and dispersible compositions and dispersions of solids in organic liquids containing the dispersant. The dispersant and the compositions are particularly useful in the preparation of air-drying paints, filled and pigmented plastics materials and caulks and sealants.

EP 0 233 684 A1

Croydon Printing Company Ltd

## Dispersing Agent

This specification describes an invention relating to a compound suitable for dispersing a solid in an organic liquid and to dispersible compositions and dispersions containing the compound.

A number of very effective dispersants for a wide range of solids, including pigments, dyestuffs, oil drilling muds etc., in essentially non-polar organic liquids, especially hydrocarbons and chlorinated hydrocarbons, are known from UK Patent Numbers 1,342,746, 1,373,660 and 2,001,083. These dispersants contain mono- or poly-ester residues derived from an aliphatic hydroxy carboxylic acid containing at least 9 carbon atoms with at least 4 carbon atoms separating the carboxyl and hydroxyl groups, a preferred acid being hydroxystearic acid. The dispersants can, however, have a deleterious effect on some properties of paint films, especially adhesivity, when dispersions containing them are converted into paints. It has now been found that dispersants of this and related structures can be improved, particularly for use in air-drying (air-oxidising) paints, by modyifying their structure so that they carry a terminal group containing at least two aliphatic carbon-carbon double bonds. The modified dispersants can give rise to improved effects, particularly improved adhesivity and/or drying rates, in paints and pigmented or filled plastics materials.

The Dispersant

According to a first aspect of the present invention there is provided an ester or an oligo- or poly-ester of the formula:

$$Y - X \qquad \text{I}$$

wherein Y is a group containing at least two aliphatic carbon-carbon double bonds; and

X is (i) the radical of a hydroxy aliphatic carboxylic acid attached to Y through the oxygen atom of the hydroxy group or the carbon atom of the carboxy group or (ii) the radical of an oligoester or a polyester derived from one or more hydroxy

aliphatic carboxylic acids attached to Y through the oxygen atom of a terminal hydroxy group or the carbon atom of a terminal carboxylic acid group, each of (i) and (ii) also having an acidic or a basic amino group, or the salt thereof with a counterion.

Where the radical X is attached to Y through the carbon atom of a carboxy group, the acid group on X may be provided by replacing the hydrogen atom of the hydroxy group with an acidic radical, such as phosphonate or sulphonate. Where the radical X is attached to Y through the oxygen atom of a hydroxy group, the acidic or basic amino group on X may be provided by the terminal carboxylic acid group, or by replacing the hydroxy group in the terminal carboxylic acid group with a radical comprising an acidic group, such as phophonate or sulphonate, or a basic amino group, as hereinafter more particularly described.

A preferred form of the compound in accordance with the first aspect of the present invention is of the formula:

$$Y - CO -[O - A - CO]_n - J \qquad IIa$$

or

$$(Y - O -[CO - A - O]_n)_m - J^1 \qquad IIb$$

wherein Y is as hereinbefore defined;

A is a divalent aliphatic radical;

n is an integer from 1 to 100;

J is either (a) -OM wherein M is H, $NH_4$, substituted ammonium or a metal, or (b) - Z - R, wherein Z is a divalent bridging group and R is either (i) a basic amino group or the salt thereof with an acid or (ii) sulphonate, phosphonate, sulphate or phosphate;

m is 1 or 2;

and $J^1$ is phosphonate or sulphonate in the free acid form or as a metal or ammonium salt.

The group represented by Y is preferably an alkapolyenyl group more preferably containing 2 or 3 carbon-carbon double bonds. It may

contain up to 50 carbon atoms but more preferably contains from 8 to 25 carbon atoms. It may carry substituents that do not confer water solubility on the molecule, such as hydroxy, halogen, amino and alkoxy, but is preferably unsubstituted. Examples of suitable groups Y-CO- are 9,12-octadecadienoyl (linoleoyl), 9,12,15-octadecatrienoyl (linolenoyl), and 9,11,17-octadecatrienoyl (eleostearoyl).

The divalent aliphatic group represented by A is preferably alkylene or alkenylene preferably containing from 4 to 25, especially from 4 to 20, carbon atoms with at least 4 carbon atoms between the oxygen atom and carbonyl group. Where n > 1 the groups represented by A in the polyester chain $[O - A - CO]_n$ may be the same (i.e. it is a homopolyester) or different (i.e. it is a copolyester). The dispersing properties of the compound are not significantly affected by the presence of a small proportion of amide units in the polyester chain and the present invention includes a polyester as hereinbefore defined containing a small proportion of amide links, especially such a compound in which the ratio of ester to amide linkages is at least ten. It is generally preferred that, where the aliphatic chain contains nine or more carbon atoms, n is from 1 to 10 and that, where the aliphatic chain contains up to eight carbon atoms, n is from 1 to 60. The groups represented by A may carry other substituents which do not confer water-solubility on the molecule, such as halogen and alkoxy. Examples of suitable groups are poly(12-hydroxystearoyl), poly(ricinoyl) and poly(6-hydroxycaproyl) in which A is 11-(n-hexyl)-n-undecan-1,11-ylene, 11-(n-hexyl)-n-undec-8,9-en-1,11-ylene and n-pentan-1,5-ylene, respectively.

The polyester residue of the formula,

$$Y - CO -[O - A - CO]_n- \qquad IIIa$$

is derivable from a mixture of (i) a saturated or unsaturated aliphatic hydroxycarboxylic acid containing from 4 to 25 carbon atoms having at least 4 carbon atoms between the hydroxy and carboxyl groups or a cyclic precursor thereof, such as a lactone and (ii) a polyenyl carboxylic

acid, preferably aliphatic, of the formula Y-COOH. Examples of suitable hydroxycarboxylic acids and precursors are 12-hydroxystearic acid, ricinoleic acid, 6-hydroxycaproic acid and caprolactone. Examples of suitable polyenyl carboxylic acids from which the end group Y-CO- is derivable are linoleic acid, linolenic acid, eleostearic acid and mixtures containing these acids which are derivable from natural products and synthetic derivatives thereof such as dehydrated castor oil, soya bean oil, linseed oil, safflower oil, cottonseed oil, sunflower oil, grapeseed oil and wood oil.

The polyester residue of the formula:

$$Y - O -[CO - A - O]_n- \qquad IIIb$$

is derivable from a reaction of (i) a saturated or unsaturated aliphatic hydroxycarboxylic acid containing from 4 to 25 carbon atoms having at least 4 carbon atoms between the hydroxy and carboxyl groups or a cyclic precursor thereof, such as a lactone and (ii) a polyenyl alcohol (polyenol) of the formula, Y-OH. Examples of suitable hydroxycarboxylic acids and precursors are 12-hydroxystearic acid, ricinoleic acid, 6-hydroxycaproic acid and caprolactone. Examples of suitable polyenols from which the end group Y-O- is derivable are linoleyl and linolenyl alcohols and mixtures of these derivable from natural products.

The commercial grades of aliphatic hydroxycarboxylic acids, polyenyl-aliphatic carboxylic acids and alkapolyenols from which the present compounds are conveniently prepared, usually contain a minor proportion of hydroxyl-free aliphatic chains or saturated aliphatic chains and thus the compounds of the present invention, in the normal commercial form, will comprise a mixture of molecules in accordance with Formula I, IIa or IIb and those without a terminal polyenyl group.

Where in Formula IIa J is OM, the acidic group or salt thereof comprises a COOM group made up by the terminal CO group in the polyester chain of Formula IIIa and OM. M is preferably H, an alkali or alkaline earth metal or substituted ammonium. Examples of suitable alkali and

alkaline earth metals are lithium, sodium, potassium, barium, magnesium and especially calcium. Where M is substituted ammonium it is preferably quaternary ammonium and more especially polyalkyleneimmonium, the latter being conveniently formed by reaction of a polyalkyleneimine (PAI) with a polyester of Formula IIa in which J is OH, or by forming such a polyester in the presence of a PAI. Where M is a PAI, the compound of Formula IIa comprises a PAI backbone having one or more polyester side-chains of Formula IIIa linked to the PAI backbone through ionic "salt" links.

In the group - Z - R, represented by J in Formula IIa above, the divalent bridging group, Z, is preferably of the formula:

- NQ - L -, 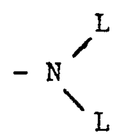 or - O - L -

wherein Q is H, alkyl or alkenyl, preferably containing up to 25 carbon atoms, and L is an alkylene, alkenylene or hydroxyalkylene group, preferably containing from 2 to 6 carbon atoms. Where Z is linked to a nitrogen atom in R through two groups, L, these can form a diaza-cycloaliphatic group. Examples of the groups represented by Q are H, methyl, ethyl, n-propyl, n-butyl, octadecenyl and octadecyl; of the groups represented by L are $-(CH_2)_2-$, $-(CH_2)_3-$, $-(CH_2)_4-$, $-(CH_2)_6-$ and $-CH_2-CHOH-CH_2-$; and of a diazacycloaliphatic bridging group is piperazin-1,4-ylene.

The basic amino group represented by R may be a primary, secondary or tertiary amino group or a substituted ammonium group and is preferably of the formula:

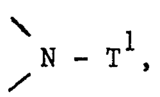 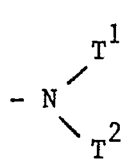 or 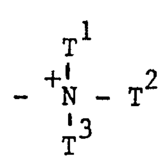 $V^-$

wherein $T^1$, $T^2$ and $T^3$ are each independently H, alkyl, alkenyl or

cycloalkyl, in which the alkyl groups preferably contain up to 25 carbon atoms and the cycloalkyl groups preferably contain from 4 to 8 carbon atoms and each may be substituted by non-polar groups; and $V^-$ is a coloured or colourless anion. Examples of the groups represented by $T^1$ to $T^3$ are methyl, ethyl, n-propyl, n-butyl, octadecyl, octadecenyl, 2-hydroxyethyl and cyclohexyl. The anion, $V^-$, can be from any inorganic or coloured or colourless organic acid, such as HCl, $H_2SO_4$, $CH_3COOH$, $C_2H_5COOH$, HCOOH, $CH_3OSO_3H$, $CH_3SO_3H$, $C_6H_5SO_3H$, $C_6H_5COOH$ or an organic dye having a $-SO_3H$ or -COOH group, especially an azo, TPM, anthraquinone or phthalocyanine dye containing a $-SO_3H$ or -COOH group, such as are described in the Third Edition of the Colour Index (1971). Examples of suitable coloured acids are phthalocyanine sulphonic acids, such as copper phthalocyanine mono- and poly-sulphonic acids and mixtures thereof; sulphonated dichlorobenzidine disazo dyes, such as acetoacetanilide ← dichlorobenzidine → sulpho-acetoacetanilide; sulphonated naphthalene disazo dyes, such as CI Acid Orange 33 and aniline → carbonyl-J-acid ← aniline; sulphonated anthraquinone dyes, such as 1-amino-2-sulpho-4-anilino-AQ and TPM acid dyes such as CI Acid Blue 1, CI Acid Blue 85.

Alternatively, and more preferably, J, may be derived from a polyalkyleneimine (PAI). In this case Z is derived from an aminoethylene group, $-NH-CH_2CH_2-$, of the PAI and R is the remainder of the PAI, i.e. J is joined to the polyester chain by a covalent bond between a nitrogen atom on the PAI and the carbon atom of terminal carbonyl group on the polyester chain. The compound of Formula IIa above in which J comprises a PAI radical is similar to the polyester-PAI dispersants described and claimed in GB 2,001,083 and EP 208,041A, in which the PAI and polyester chains are linked through covalent "amide" links, except that one or more, and preferably at least 50%, of the polyester side chains carry a terminal group having at least two aliphatic double bonds, as hereinbefore described (as mentioned hereinbefore, where the polyester chain is derived from a commercial hydroxycarboxylic acid, such as commercial 12-hydroxystearic acid or ricinoleic acid, it is not possible to make a compound in which all the

polyester chains are terminated with a polyenyl group because the starting material contains a significant proportion, generally from 5 to 15%, of saturated carboxylic acids which will form terminal groups on some of the polyester chains; the commercial grades of polyunsaturated aliphatic carboxylic acids and alcohols from which Y is derivable also contain a proportion of saturated acids or alcohols).

Where R and/or M is derived from PAI, the PAI, which may be branched or straight-chain, preferably has a weight-average molecular weight from 500 to 600,000, and more preferably up to 100,000 and especially from 1000 to 100,000. The PAI is preferably a poly(ethyleneimine) (PEI).

The present compound in which R and/or M is derived from a PAI, the PAI group preferably carries from 1 to 2000 polyester chains and more preferably from 4 to 1000 polyester chains.

Where the present compound is derived from a polyenyl aliphatic acid, a hydroxycarboxylic acid and a PAI it will generally comprise a mixture of compounds of Formula IIa in some of which which the polyester chain is linked to the PAI through "salt" links (M is polyalkyleneimmonium) and in others through "amide" links (J is a PAI radical) depending on the severity of the reaction conditions.

Where R represents sulphonate, phosphonate, sulphate or phosphate, in the free acid form or as a metal or ammonium salt or $J^1$, in Formula IIb, represents sulphonate or phosphonate, the cation may be a hydrogen ion, a metal ion, an ammonium ion or a substituted ammonium ion and examples of suitable cations are $H^+$, $Na^+$, $K^+$, $Ca^{2+}$, $NH_4^+$, $N(CH_3)_4^+$, $NH(CH_3)_3^+$ and polyethyleneimmonium.

The compounds of Formulae I, IIa and IIb can be prepared by processes analogous to those described in GB 1,342,746, GB 1,373,660, GB 2,001,083 and EP 127,325 (with omission of the epoxidation), provided that the reactant forming the terminal group Y comprises an aliphatic chain containing at least two carbon-carbon double bonds. The disclosures of UK Patent Specifications Nos 1,342,746, 1373660 and 2,001,083 are incorporated into the present specification by reference.

The Dispersible Composition

The compounds according to Formulae I, IIa and IIb are suitable for the dispersion of a solid in an organic liquid and according to a further feature of the present invention there is provided a dispersible composition of a solid and a compound according to Formula I or II.

It is preferred that the amount of the compound of Formula I, IIa or IIb, hereinafter referred to as "the present dispersant", in the composition is from 1% and 50%, and more preferably from 2% to 30%, by weight, based on the amount of solid.

The solid is preferably an inorganic or organic pigment from any of the recognised classes of pigments described, for example, in the Third Edition of the Colours Index (1971) and subsequent revisions and supplements, under the chapter headed "Pigments". Other preferred solids are fillers and extenders such as talc, kaolin, barytes and chalk.

Examples of inorganic pigments are titanium dioxide, zinc oxide, Prussian blue, cadmium sulphide, iron oxides, carbon black, vermillion and ultramarine. Further examples of inorganic pigments are the chrome pigments including chromates, molybdates and mixed chromates/sulphates of lead, zinc, barium and calcium and the various mixtures and modifications thereof which are commercially available as greenish-yellow to red pigments under the names primrose, lemon, middle, orange, scarlet and red chromes.

Examples of organic pigments are those from the azo, disazo, condensed disazo, thioindigo, indanthrone, isoindanthrone, anthraquinone, anthranthrone, isodibenzanthrone, triphendioxazine, phthalocyanine, especially copper phthalocyanine and its nuclear halogenated derivatives, and quinacridone series, and lakes of acid, basic and mordant dyes. Preferred organic pigments are copper phthalocyanines, monoazos, disazos, indanthrones, triphendioxazines and quinacridones.

The dispersible composition may be prepared by treatment of the solid with the dispersant under conditions where the dispersant becomes evenly distributed throughout the solid and preferably over the surface thereof. Thus, where convenient an aqueous slurry or dispersion of the

solid may be mixed with an aqueous emulsion or a solution of the present dispersant in an organic liquid, following which the organic liquid and water may be removed, by filtration, and the solid mixture may be dried to provide a dry dispersible composition of the solid and the present dispersant. Such a dry dispersible composition of a solid and the present dispersant forms a further feature of the present invention. The dry composition can be subsequently incorporated into an organic liquid to give a dispersion. Where the solid is a pigment, such a dry composition can be formed by mixing the dispersant, preferably in an aqueous emulsion, with the solid during a late stage in the preparation of the pigment so that the dispersant forms an intimate mixture with the pigment.

The Dispersion

The dispersant and the dispersible composition are suitable for the preparation of a dispersion of the solid in an organic liquid and according to a further feature of the present invention there is provided a dispersion of a solid in an organic liquid containing the present dispersant. The dispersion preferably contains from 5% to 90%, by weight, of the solid, based on the total weight of the dispersion, the precise quantity depending on the nature of the solid and the relative densities of the solid and the organic liquid. For example, a dispersion of an organic solid preferably contains from 15% to 60% by weight of solid whereas a dispersion of an inorganic solid preferably contains from 40% to 90% of the solid, based on the total weight of the dispersion.

The organic liquid in which the solid is dispersed may be any inert organic liquid in which the present dispersant is at least partially soluble at ambient temperatures and which is stable under the subsequent conditions of usage of the dispersion. If desired, mixtures of organic liquids may be used. Preferred organic liquids are aliphatic and aromatic hydrocarbons and halogenated hydrocarbons such as benzene, toluene, xylene, chlorobenzene, trichloroethane, carbon tetrachloride and perchloroethylene. Other organic liquids which can be used are esters, such as propyl acetate and 2-ethoxyethyl acetate,

aliphatic alcohols such as n-butanol, ethers such as tetrahydrofuran and ketones such as methylbutylketone and particularly mixtures of these with aromatic hydrocarbons, such as 4:1 xylene:n-butanol, which is widely used in the preparation of paints. In general the organic liquid or mixture of liquids will depend on the end-use of the dispersion.

The dispersion may also contain other ingredients such as are normally added to improve the properties and performance of dispersions. Examples of such other ingredients are fluidising agents, anti-sedimenting agents, preservatives against microbial growth and resins.

The present dispersion is compatible with the fluidising agents disclosed in UK Patent Specifications Nos 1,508,576 and 2,108,143 the contents of which are incorporated herein by reference. The fluidising agent described in UK 1,508,576 is a substituted ammonium salt of a coloured acid wherein there are from 19 to 60 carbon atoms in at least 3 chains attached to the N atom of the substituted ammonium ion. The fluidising agent described in UK 2,108,143 is a water-insoluble disazo compound comprising a central divalent group free from acidic and other ionic substituents linked, through azo groups, to two monovalent end groups, one end group being free from acidic and other ionic substituents and the other carrying a single substituted ammonium salt group. The present dispersion incorporating such fluidising agents forms a further feature of the present invention.

The dispersion of the invention can be obtained by any of the conventional methods for preparing dispersions. Thus the solid, the organic liquid and the present dispersant may be mixed together in any order and, where necessary, the mixture subjected to a mechanical treatment to reduce the particle size of the solid, for example by ball, gravel or bead milling until a stable dispersion is formed. The treatment is preferably continued until the mean diameter of the pigment particles is below 10 microns and more preferably below 5 microns. Alternatively the dispersible composition can be added to an organic liquid, or the solid can be flushed into an organic liquid containing the dispersant, and dispersed by an appropriate mechanical treatment.

If the present dispersant is used in the form of a salt it is not essential to take the preformed salt as this can be prepared in situ, during the preparation of the dispersion, by mixing together the solid, the organic liquid, the present dispersant, in its free acid or base form, and either a base or acid, and subjecting the mixture to a mechanical grinding operation. It is not essential that the present dispersant is converted completely into the salt form because in many cases the free acid or base form is equally effective in dispersing the solid.

Another process for the preparation of the present dispersion comprises reducing the particle size of the solid alone, or in admixture with the organic liquid or the present dispersant alone followed by the addition of the other ingredients when the desired reduction in particle size has been achieved.

The dispersible composition can be obtained from the dispersion by removal of the organic liquid, for example, by evaporation.

Application of the Dispersion

The present dispersant is particularly suitable for the dispersion of pigments, fillers and extenders destined for use in paints, especially air-drying paints, because the agent is compatible with the resins used in such paints and does not adversely affect the properties of the paint film, such as adhesivity, hardness, gloss, transparency, etc. There are also advantages in terms of improved drying rates asociated with the use of the present dispersant. In these respects it is superior to the aforementioned known dispersants of similar structure in which the terminal group, Y, does not contain at least two aliphatic carbon-carbon double bonds, groups while retaining the powerful dispersing action of these known dispersants. Because of the enhanced adhesivity associated with the use of the present dispersant, the dispersion and dispersible composition are suitable for the introduction of pigments, fillers and extenders into plastics materials.

According to a further feature of the present invention there is provided a paint containing a compound according to Formula I or II.

The present dispersants and dispersions are advantageous in both air-drying and non-air-drying paints.

Paint systems in which the present dispersant, and dispersions derived therefrom, are particularly suitable include air-drying (air-oxidising) systems such as alkyds, especially long-, medium-, and short-oil modified alkyds, and vinyl, styrene, vinyl toluene, acrylate, methacrylate, phenol and rosin modified alkyds. The oils may be of the so-called drying and semi-drying varieties. Other, particularly suitable air-drying (air-oxidising) systems are thixotropic alkyds, urethane alkyds and urethane oils.

Other paint systems in which the present dispersant, and dispersions derived therefrom, are suitable include combinations of alkyds, modified alkyds such as those named above, non-drying oil modified alkyds and oil-free polyester resins with cross-linkers or hardeners such as melamine-formaldehyde, urea-formaldehyde, alkylated melamine-formaldehydes, alkylated urea-formaldehydes and hexamethoxymethylmelamine. Other suitable paint systems are chlorinated rubber, solvent-based vinyl, nitrocellulose, polyamide, ethyl cellulose, acrylic, urethane, epoxy and silicone-modified alkyd paint systems.

The present dispersant, and dispersions derived therefrom, are also particularly suitable for use in paints which are combinations of air-oxidising and non-oxidising resin systems, as described above.

The present dispersant is also suitable for use in sealants, mastics, putties and caulks, particularly those containing large amounts of solid particulate or fibrous material, and especially particularly those that cross-link by an oxidative mechanism. Examples of sealants that cross-link by an oxidative mechanism include oil-based caulks or putties, polysulphide type sealants and butyl rubbers.

The invention is further illustrated by the following examples in which all parts and percentages are by weight unless otherwise indicated.

Example 1

A mixture of 200g of ricinoleic acid, 60g of linoleic acid (a dienoic acid) and 0.5g of tetrabutyl titanate was stirred for 9 hours at 190-200°C under a stream of inert gas. The product, a brown liquid, had an acid value of 66mg.KOH/g, and is hereinafter referred to as Dispersant 1.

The ricinoleic acid used in this and the following Examples was NOUR Acid CS 80 (hereinafter "CS 80") from AKZO (NOUR is a trade mark) having an acid value of 175-185mg.KOH/g and a hydroxyl value of at least 150mg.KOH/g.

Example 2

A mixture of 133.3g of CS 80, 40g of distilled soya-bean oil fatty acid and 0.33g of tetrabutyl titanate was stirred for 9 hours at 180-200°C under a stream of inert gas. The product, a brown liquid, had an acid value of 66mg.KOH/g, and is hereinafter referred to as Dispersant 2.

The distilled soya-bean oil fatty acid used in this and the following Examples was NOUR Acid SE 30 (hereinafter "SE 30") from AKZO (NOUR is a trade mark) which contains the following ingredients in the approximate proportions indicated:

| | |
|---|---|
| $C_{12}$ - $C_{18}$ saturated fatty acids | 16% |
| Oleic acid (mono-enoic acid) | 24% |
| Linoleic acid (di-enoic acid) | 53% |
| Linolenic acid (tri-enoic acid) | 7% |

Example 3

A mixture of 133.3g CS 80, 40g of distilled linseed oil fatty acid and 0.33g of tetrabutyl titanate was stirred for 9 hours at 180-200°C under a stream of inert gas. The product, a brown liquid, had an acid value of 67mg.KOH/g, and is hereinafter referred to as Dispersant 3.

The distilled linseed oil fatty acid used in this and the following Examples was NOUR Acid LE 80 (hereinafter "LE 80") from AKZO (NOUR is a trade mark) which contains the following ingredients in the approximate proportions indicated:

| | | |
|---|---|---|
| $C_{12}$ - $C_{18}$ saturated fatty acids | | 13% |
| Oleic acid | (mono-enoic acid) | 20% |
| Linoleic acid | (di-enoic acid) | 17% |
| Linolenic acid | (tri-enoic acid) | 50% |

Examples 4 to 11

Table 1 lists a series of preparations carried out in a similar manner to Example 3, but using the starting materials, the weights thereof, and the reaction times and temperatures shown in the table. In each case tetrabutyl titanate was added as catalyst at a loading of 0.2% w/w calculated on total weight of starting materials.

Table 1

| Ex No | Di-/Tri-enoic acid, & wt (g) | Hydroxy carboxylic acid and wt (g) | Reaction time/temp (hr/°C) | Acid Value of prod (mg KOH/g) | Product name (Disp No) |
|---|---|---|---|---|---|
| 4 | SE 30/300 | CS 80/1000 | 9/180-200 | 68.0 | 4 |
| 5 | SE 30/222 | CS 80/303 | 8/170-80 + 4/180-90 | 97.3 | 5 |
| 6 | SE 30/75 | CS 80/412 | 8/170-80 + 4/180-90 | 47.3 | 6 |
| 7 | SE 30/150 | CS 80/500 | 8/180-200 | 63.6 | 7 |
| 8 | SE 30/89 | CS 80/493 | 12/180-90 | 48.6 | 8 |
| 9 | LE 80/130 | CS 80/464 | 7½/170-80 + 1/190-200 | 58.5 | 9 |
| 10 | DE 650/69 | CS 80/200 | 16/170-80 | 67.0 | 10 |
| 11 | DED 5981/69 | CS 80/200 | 16/170-90 | 66.0 | 11 |

In Table 1, DE 650 is NOUR Acid DE 650 from AKZO and DED 5981 is DEDICO 5981 from UNICHEMA (DEDICO is a trade mark) and both are commercial dehydrated castor oil fatty acid.

Similar dispersants to those described above as Dispersants 1 to 11 are prepared if the stated amounts of CS 80 are replaced by the equivalent amounts of commercial 12-hydroxystearic acid having an acid value of about 180mg KOH/g and a hydroxyl value of about 150mg KOH/g.

Example 12

A mixture of 100g of Dispersant 1 (carboxylate terminated polyester) and 8g of a dry polyethyleneimine having a weight-average molecular weight of about 100,000 ("POLYMIN Waterfree" - POLYMIN is a trade mark of BASF) was stirred under inert gas for 1½ hours at 150°C. The product, a very viscous brown liquid with an acid value of 28mg.KOH/g, is hereinafter referred to as Dispersant 12.

Examples 13 to 30

Table 2 lists a series of preparations carried out in a similar manner to Example 12, but using the starting materials, the weights thereof, and the reaction times and temperatures shown in the table.

Table 2

| Ex No | Polyester Component (Disp No) | Weight of Polyester component (g) | Weight of "POLYMIN Waterfree" (g) | Reaction time & temp (hrs/°C) | Acid Value of prod (mg KOH/g) | Product name (Disp No) |
|---|---|---|---|---|---|---|
| 13 | 2 | 100 | 8.0 | 1½/130-60 | 27.9 | 13 |
| 14 | 3 | 100 | 8.0 | 1½/150-60 | 28.2 | 14 |
| 15 | 4 | 200 | 6.7 | 1½/150 | 48.7 | 15 |
| 16 | 4 | 197 | 9.9 | ½/200 | 43.5 | 16 |
| 17 | 4 | 175 | 14.0 | 1½/150 | 28.6 | 17 |
| 18 | 4 | 190 | 19.0 | ½/200 | 18.4 | 18 |
| 19 | 4 | 182 | 26.0 | 0.75/150 | 23.6 | 19 |
| 20 | 4 | 45 | 9.0 | 1½/150 | 26.3 | 20 |
| 21 | 4 | 42 | 14.0 | 1½/150 | 25.5 | 21 |
| 22 | 5 | 49 | 7.0 | 1½/120-30 | 53.0 | 22 |
| 23 | 6 | 49 | 7.0 | 1½/120-30 | 26.0 | 23 |
| 24 | 6 | 45 | 4.5 | 1½/120-30 | 24.5 | 24 |
| 25 | 6 | 53 | 5.3 | 2.75/130-40 | 16.9 | 25 |
| 26 | 7 | 490 | 70.0 | 0.75/150 | 20.3 | 26 |
| 27 | 8 | 440 | 44.0 | 1½/120-30 | 23.6 | 27 |
| 28 | 9 | 385 | 55.0 | 0.75/150 | 20.8 | 28 |
| 29 | 10 | 98 | 14.0 | 0.75/150 | 25.0 | 29 |
| 30 | 11 | 140 | 20.0 | 0.75/150 | 19.6 | 30 |

Example 31

A mixture of 250g of E-caprolactone, 307g of NOUR Acid SE 30 and 1.1g of tetrabutyl titanate was stirred at 160-180°C for 4 hours under a stream of inert gas. The product, a soft wax, had an acid value of 105mg KOH/g, and is hereinafter referred to as Dispersant 31.

Example 32

This was prepared in the same way as Example 15, except that 400g of E-caprolactone, 246g of NOUR Acid SE 30 and 1.3g of tetrabutyl titanate were used. The product, a soft wax, had an acid value of 70mg KOH/g and is hereinafter referred to as Dispersant 32.

Example 33

A mixture of 150g of E-caprolactone, 30.5g of NOUR Acid SE 30 and 0.33g of tetrabutyl titanate was stirred at 160-170°C for 8 hours under a stream of inert gas. The product, a wax, had an acid value of 30.5mg KOH/g, and is hereinafter referred to as Dispersant 33.

Example 34

A mixture of 84g of Dispersant 31 (carboxylate terminated polyester) and 12g of POLYMIN Waterfree was stirred under a stream of inert gas for 6 hours at 120-130°C. The product, a waxy material, had an acid value of 70mg KOH/g, and is hereinafter referred to as Dispersant 34.

Example 35

A mixture of 49g of Dispersant 32 (a carboxylate terminated polyester) and 7g of POLYMIN Waterfree was stirred under a stream of inert gas for 6 hours at 120-130°C. The product, a waxy material, had an acid value of 47mg KOH/g, and is hereinafter referred to as Dispersant 35.

Example 36

A mixture of 63g of Dispersant 33 (a carboxylate terminated polyester) and 9g of POLYMIN Waterfree was stirred under a stream of inert gas for 15 minutes at 120°C. The rubbery mass was then dissolved in 170g of xylene. The product, which forms a jelly-like solution in xylene, is hereinafter referred to as Dispersant 36.

Example 37

A mixture of 65g of Dispersant 33 and 5g of POLYMIN Waterfree was stirred under a stream of inert gas for 15 minutes at 120°C. The rubbery mass was then dissolved in 200g of xylene. The product, which forms a jelly-like solution in xylene, is hereinafter referred to as Dispersant 37.

Example 38

A mixture of 65g of Dispersant 32 and 5g of POLYMIN Waterfree was stirred under a stream of inert gas for 3 hours at 120-130°C. The product, a waxy material, is hereinafter referred to as Dispersant 38.

Example 39

A mixture of 131.1g of E-caprolactone, 26.6g of NOUR Acid SE 30, 10.2g of dimethylaminopropylamine and 0.33 g of tetrabutyl titanate was stirred at 120°C for 1 hour, 160-165°C for 8 hours and 180°C for 8 hours, under a stream of inert gas. The product, a waxy material, had an acid value of 10.6 mg KOH/g and an equivalent weight with respect to basic nitrogen of 192.3. It is hereinafter referred to as Dispersant 39.

Example 40

A mixture of 43.5g of Dispersant 39 and 2.7g of dimethyl sulphate was stirred at 80-90°C for 1 hour. The product, a waxy solid, is hereinafter referred to as Dispersant 40.

Example 41

This was prepared in exactly the same way as Example 39, except that 5.1g of dimethylaminopropylamine were used. The product, a waxy material, had an acid value of 16mg KOH/g, and an equivalent weight with respect to basic nitrogen of 3750. It is hereinafter referred to as Dispersant 41.

Example 42

A mixture of 42.5g of Dispersant 41 and 1.35g of dimethyl sulphate was stirred at 80-90°C for 1 hour. The product, a waxy solid, is hereinafter referred to as Dispersant 42.

Example 43

A mixture of 65.5g of Dispersant 4, 8.1g of dimethylaminopropylamine and 17.3g of toluene was stirred and heated under reflux using a Dean and Stark head to remove water. When the temperature reached 170-180°C it was maintained there for 3½ hours. The reaction product was obtained as an 88% solution in toluene. It had an acid value of 20.6mg KOH/g, an equivalent weight with respect to basic nitrogen of 1014, and is hereinafter referred to as Dispersant 43.

Example 44

26g of an 88% solution of Dispersant 43 in toluene was stirred and heated at 40°C. 2.7g of dimethyl sulphate was added, and the mixture stirred and heated at 90-95°C for 1 hour. The toluene was then removed by distillation under vacuum. The product, a viscous liquid, is hereinafter referred to as Dispersant 44.

Example 45

A mixture of 98g of Dispersant 10 and 14g of polyethyleneimine, having a number-average molecular weight of approximately 600, sold by the Dow Chemical Company under the name "MONTREK 6" (MONTREK is a trade name), was stirred under an inert gas for 45 minutes at 150°C. The product, a very viscous liquid with an acid value of 21.3mg KOH/g, is hereinafter referred to as Dispersant 45.

Comparative Dispersant 1 (CD 1)

A mixture of 3206g of NOUR acid CS 80 and 6g of tetrabutyl titanate was stirred at 170-175°C under a stream of inert gas. The acid value was determined at intervals, and after 17 hours when the acid value was 34mg KOH/g, reaction was stopped by cooling the reaction mixture to room temperature. The product is hereinafter referred to as CD 1.

Comparative Dispersant 2 (CD 2)

This is poly(12-hydroxystearic acid) having an acid value of 35mg KOH/g.

Comparative Dispersant 3 (CD 3)

A mixture of 1276g of Comparative Dispersant 2, 40.5g of dimethylaminopropylamine and 104g of toluene was stirred under reflux at 100°C using a Dean & Stark head to remove water. After two hours, when no further water was being removed, the toluene was removed by distillation under vacuum. The reaction product, hereinafter called CD 3, had an acid value of 24.4mg KOH/g and an equivalent weight, with respect to basic nitrogen, of 3459.

Comparative Dispersant 4 (CD 4)

To 980g of CD 2, stirring at 40°C, there were added 33.8g of dimethylsulphate. An exotherm resulted, raising the temperature to 50°C

and this was raised to 90° and maintained there for 1½ hours by the application of external heat. At the end of this period no free dimethyl sulphate could be detected in the reaction mass by gas-liquid chromatography. The product is hereinafter called CD 4.

Comparative Dispersant 5 (CD 5)

A mixture of 232g of commercial grade 12-hydroxystearic acid, 65g of stearic acid and 0.6g of tetrabutyl titanate was stirred and heated at 170-180°C for 8 hours under a stream of inert gas. The product, a pasty material, had an acid value of 67.6mg KOH/g, and is hereinafter referred to as CD 5.

Comparative Dispersant 6 (CD 6)

A mixture of 116g of NOUR Acid CS 80, 32.5g of oleic acid, and 0.3g of tetrabutyl titanate was stirred and heated at 170-180°C for 16 hours under a stream of inert gas. The product, a viscous liquid had an acid value of 60.6mg KOH/g, and is hereinafter referred to as CD 6.

Comparative Dispersant 7 (CD 7)

A mixture of 175g of Comparative Dispersant 5 and 25g of POLYMIN Waterfree was stirred under an inert gas for 45 minutes at 150°C. The product, a very viscous liquid with an acid value of 24.5mg KOH/g, is hereinafter referred to as CD 7.

Comparative Dispersant 8 (CD 8)

A mixture of 66g of CD 5, 8.1g of dimethylaminopropylamine and 17.3g of toluene was stirred and heated under reflux using a Dean and Stark head to remove water. When the temperature reached 170-180°C it was maintained there for 6 hours. The toluene was then removed by distillation under vacuum. The reaction product, hereinafter called CD 8, had an acid value of 11.1mg KOH/g and an equivalent weight with respect to basic nitrogen of 1043.

Comparative Dispersant 9 (CD 9)

A mixture prepared by adding 2.7g of dimethylsulphate to 25.8g of CD 8, stirring at 50-60°C, was held at 90-95°C for 1 hour. The product, a soft wax, is hereinafter referred to as CD 9.

Comparative Dispersant 10 (CD 10)

A mixture of 54.6g of CD 6 and 7.8g of POLYMIN Waterfree was stirred and heated under an inert gas for 45 minutes at 150°C. The product, a very viscous liquid, with an acid value of 26mg KOH/g, is hereinafter referred to as CD 10.

Fluidising Agent 1 (FA 1)

To a stirred slurry of 300g of a filter cake containing 85.6g of copper phthalocyanine sulphonic acid (which contains, on average, 1.3 sulphonic acid groups per copper phthalocyanine nucleus) in 2l of water at 70-75°C was added 76g of a mixture of 75% dioctadecyl-dimethyl ammonium chloride and 25% iso-propanol (ARQUAD 2HT-75 from AKZO: ARQUAD is a trade mark). After stirring at 90-100°C for 2 hours the product, FA 1, was filtered off, washed with water and dried.

Fluidising Agent 2 (FA 2)

Solution A: Tetrazo-3,3'-dichlorobenzidine was prepared by tetrazotising 38g of 3,3'-dichlorobenzidine in 1200g of water at 0°C.

Solution B: A mixture of 28g acetoacetanilide (1st coupling component) and 46.5g of potassium N-acetoacetyl-4-sulphanilate (2nd coupling component) was stirred into 500g of water. To the slurry were added 13.5g of 46.7% sodium hydroxide, and the temperature raised to complete solution of the acetoacetanilide. To the solution were added 16g of glacial acetic acid, 18.9g of 36% hydrochloric acid and 700g of water.

Coupling: Solution A was added to Solution B over 75 minutes, the pH being controlled at 4.3 by the addition of sodium acetate. The reaction mixture was stirred overnight and then tested to ensure that no excess tetrazo was present.

The reaction mixture was heated to 70°C, 75.5g of dioctadecyldimethylammonium chloride (DODMAC) was added, and the mixture stirred for 1 hour at 70°C. The product, FA 2, made with equimolecular proportions of the two coupling components, was filtered off, washed with water and dried at 50-60°C.

Fluidising Agent 3 (FA 3)

Solution A: Tetrazo-3,3'-dichlorobenzidine was prepared by tetrazotising 13.45g of 3,3'-dichlorobenzidine in 500g of water at 0°C.

Solution B: A mixture of 7.2g of 2-naphthol and 12.3g of the sodium salt of 6-hydroxy-2-naphthalene sulphonic acid (Schaeffer's acid) was stirred into 500g of water. A 30% aqueous solution of sodium hydroxide was then added with stirring until the pH was 8.5.

Coupling Solution A was added to Solution B over 1 hour, during which the temperature was maintained below 10°C and the pH was controlled at 8.5 by the addition of a 30% solution of sodium hydroxide. The reaction mixture was stirred for 1 hour, then heated to 90°C, cooled and filtered.

The filter cake was reslurried in 900g of water, heated to 70°C and the pH adjusted to 3 by the addition of dilute hydrochloric acid. To the stirred acid slurry was added 22.5g of DODMAC over 10 minutes and the mixture stirred for 1 hour at 70°C. The product, FA 3, was filtered off, washed with water and dried at 50-60°C.

Examples 46 to 101

The dispersions, having the formulations described in Table 3, were prepared by ball milling the ingredients for 16 hours. All the resulting dispersions were fluid, deflocculated and with pigment particles having a mean diameter below 5 microns.

Table 3

| Example | CI Pigment & Amount in g | Dispersant & Amount in g | Fluidising Agent & Amount in g | Org Liq & amount in g |
|---|---|---|---|---|
| 46 | Blue 15:2/3 | Disp 5/0.6 | FA 1/0.3 | WS/6.1 |
| 47 | Blue 15:2/3 | Disp 10/0.6 | FA 1/0.3 | WS/6.1 |
| 48 | Blue 15:2/3 | Disp 11/0.6 | FA 1/0.3 | WS/6.1 |
| 49 | Yellow 1/3 | Disp 5/0.6 | FA 2/0.3 | WS/6.1 |

| Example | CI Pigment & Amount in g | Dispersant & Amount in g | Fluidising Agent & Amount in g | Org Liq & Amount in g |
|---|---|---|---|---|
| 50 | Yellow 1/3 | Disp 10/0.6 | FA 2/0.3 | WS/6.1 |
| 51 | Yellow 1/3 | Disp 11/0.6 | FA 2/0.3 | WS/6.1 |
| 52 | Red 4/3 | Disp 5/0.6 | FA 3/0.3 | WS/6.1 |
| 53 | Red 4/3 | Disp 10/0.6 | FA 3/0.3 | WS/6.1 |
| 54 | Red 4/3 | Disp 11/0.6 | FA 3/0.3 | WS/6.1 |
| 55 | Violet 19/3 | Disp 5/0.6 | - | WS/6.4 |
| 56 | Violet 19/3 | Disp 10/0.6 | - | WS/6.4 |
| 57 | Violet 19/3 | Disp 11/0.6 | - | WS/6.4 |
| 58 | Violet 19/3 | Disp 12/0.6 | - | WS/6.4 |
| 59 | Blue 15:2/3 | Disp 5/0.6 | FA 1/0.3 | XYL/6.1 |
| 60 | Blue 15:2/3 | Disp 10/0.6 | FA 1/0.3 | XYL/6.1 |
| 61 | Blue 15:2/3 | Disp 11/0.6 | FA 1/0.3 | XYL/6.1 |
| 62 | Blue 15:2/3 | Disp 6/0.6 | FA 1/0.3 | WS/6.1 |
| 63 | Yellow 1/3 | Disp 7/0.6 | FA 2/0.3 | WS/6.1 |
| 64 | White 6/7 | Disp 1/0.21 | - | WS/2.79 |
| 65 | Yellow 34/7 | Disp 2/0.35 | - | WS/2.65 |
| 66 | Yellow 42/6 | Disp 4/0.3 | - | WS/3.7 |
| 67 | Yellow 34/7 | Disp 2/0.35 | - | XYL/2.65 |
| 68 | White 6/7 | Disp 8/0.35 | - | WS/2.65 |
| 69 | Red 101/6 | Disp 9/0.3 | - | WS/3.7 |
| 70 | Yellow 34/7 | Disp 8/0.35 | - | XYL/2.65 |
| 71 | Yellow 34/7 | Disp 9/0.35 | - | BA/2.65 |
| 72 | Yellow 42/6 | Disp 3/0.3 | - | WS/3.7 |
| 73 | Yellow 34/7 | Disp 3/0.35 | - | WS/2.65 |
| 74 | Blue 15:2/3 | Disp 13/0.6 | FA 1/0.3 | WS/6.1 |
| 75 | Blue 15:2/3 | Disp 14/0.6 | FA 1/0.3 | WS/6.1 |
| 76 | Blue 15:2/3 | Disp 17/0.6 | FA 1/0.3 | XYL/6.1 |
| 77 | Blue 15:2/3 | Disp 18/0.6 | FA 1/0.3 | XYL/6.1 |
| 78 | White 6/7.5 | Disp 31/0.15 | - | WS/2.35 |

| Example | CI Pigment & Amount in g | Dispersant & Amount in g | Fluidising Agent & Amount in g | Org Liq & Amount in g |
|---|---|---|---|---|
| 79 | White 6/7.5 | Disp 32/0.15 | - | WS/2.35 |
| 80 | White 6/7.5 | Disp 5/0.15 | - | WS/2.35 |
| 81 | White 6/7.5 | Disp 6/0.15 | - | WS/2.35 |
| 82 | White 6/7.5 | Disp 7/0.15 | - | WS/2.35 |
| 83 | White 6/7.5 | Disp 8/0.15 | - | WS/2.35 |
| 84 | White 6/7.5 | Disp 9/0.15 | - | WS/2.35 |
| 85 | White 6/7.5 | Disp 10/0.15 | - | WS/2.35 |
| 86 | White 6/7.5 | Disp 11/0.15 | - | WS/2.35 |
| 87 | Red 101/7.5 | Disp 22/0.225 | - | WS/2.275 |
| 88 | Blue 15:2/4 | Disp 23/0.6 | FA 1/0.2 | WS/5.2 |
| 89 | Blue 15.2/4 | Disp 24/0.6 | FA 1/0.2 | WS/5.2 |
| 90 | Red 122/3 | Disp 25/0.6 | - | WS/6.4 |
| 91 | White 6/7 | Disp 33/0.35 | - | XYL/2.65 |
| 92 | Red 168/2.5 | Disp 38/0.5 | - | MIBK/7.0 |
| 93 | Blue 15:2/3 | Disp 39/0.6 | FA 1/0.3 | XYL/6.1 |
| 94 | Blue 15:2/3 | Disp 40/0.6 | FA 1/0.3 | XYL/6.1 |
| 95 | Blue 15:2/4 | Disp 41/0.4 | FA 1/0.2 | XYL/5.4 |
| 96 | Blue 15:2/4 | Disp 42/0.4 | FA 1/0.2 | XYL/5.4 |
| 97 | White 6/7.5 | Disp 43/0.15 | - | WS/2.35 |
| 98 | White 6/7.5 | Disp 44/0.15 | - | WS/2.35 |
| 99 | Blue 15:2/3 | Disp 30/0.6 | FA 1/0.3 | WS/6.1 |
| 100 | Yellow 155/3 | Disp 29/0.6 | - | WS/6.4 |
| 101 | Blue 15:2/3 | Disp 45/0.6 | FA 1/0.3 | WS/6.1 |

The following abbreviations are used in Table 3:

| | | | |
|---|---|---|---|
| WS | is White Spirit | FA 1 | is Fluidising Agent 1 |
| BA | is n-Butyl Acetate | FA 2 | is Fluidising Agent 2 |
| XYL | is Xylene | FA 3 | is Fluidising Agent 3 |
| MIBK | is Methylisobutyl Ketone | | |

Examples 102 to 107 and Comparative Examples 11 to 19

To evaluate the effect of the dispersing agents in accordance with the present invention in a conventional long oil alkyd air-drying paint system pigmented with (i) a titanium dioxide pigment, (ii) a phthalocyanine pigment, and (iii) a mixture thereof, a long oil alkyd resin with the following constitution, was used.

| | | |
|---|---|---|
| Phthalic Anhydride | 22% ) | |
| Fatty acid (Linseed) | 70% ( | 75% |
| Pentaerythritol | 8% ) | |
| White Spirit | | 25% |

The acid value of the solid portion was 9mg.KOH/g. This resin is available as SYNOLAC 50W (from Cray Valley Products Ltd: SYNOLAC is a trade mark).

A formulation of mixed driers (cobalt, lead and calcium naphthenates plus methyl ethyl ketoxime in white spirit) was added to the paint system to give the following weights of metal on solid resin, Cobalt: 0.025%, Lead: 0.25%, and Calcium: 0.25%.

In Examples 102 to 107 and Comparative Examples 12, 13, 15, 16, 18 and 19 the pigment was dispersed in solvent in the presence of the dispersant or comparative dispersant. In Comparative Examples 11, 14 and 17 (controls), the pigment was dispersed in the solvent in the presence of resin, in accordance with normal procedure in paint technology.

All the paint formulations were prepared as a concentrated mill-base in a ball mill and in each case the mean diameter of the pigment particles, after milling, was below 5 microns. After milling, the mill-base was let-down with further resin, mixed driers and solvent to produce a usable paint. In all Examples, and certain Comparative Examples, this let-down was carried out in two stages. The precise formulations of the mill-bases and let-down solutions are given in Tables 4 and 5, all quantities being expressed in grams weight. The paints containing titanium dioxide and phthalocyanine pigments were made by mixing portions of the paints containing a single pigment. These mixed formulations are given in Table 6.

The following abbreviations are used in Tables 4 to 13:

| | | | |
|---|---|---|---|
| CD: | Comparative Dispersant | Disp: | Dispersant |
| CE: | Comparative Example | Ex: | Example |
| Pig: | CI Pigment | | |

Table 4

| Component | CE 11 | CE 12 | Ex 102 | Ex 103 | CE 13 |
|---|---|---|---|---|---|
| Millbase | | | | | |
| Pig White 6 | 35.0 | 72.0 | 72.0 | 72.0 | 72.0 |
| CD 2 | - | 0.9 | - | - | - |
| Disp 1 | - | - | 0.9 | - | - |
| Disp 5 | - | - | - | 0.9 | - |
| CD 1 | - | - | - | - | 0.9 |
| SYNOLAC 50W | 5.0 | - | - | - | - |
| White Spirit | 13.8 | 17.1 | 17.1 | 17.1 | 17.1 |
| First Stage Let-down Solution | | | | | |
| SYNOLAC 50W | - | 10.34 | 10.34 | 10.34 | 10.34 |
| White Spirit | - | 10.43 | 10.43 | 10.43 | 10.43 |
| Second Stage Let-down Solution | | | | | |
| SYNOLAC 50W | 53.3 | 109.64 | 109.64 | 109.64 | 109.64 |
| Mixed Driers | 4.4 | 9.05 | 9.05 | 9.05 | 9.05 |
| White Spirit | 5.17 | 10.54 | 10.54 | 10.54 | 10.54 |

Table 5

| Component Millbase | CE 14 | CE 15 | Ex 104 | Ex 105 | CE 16 |
|---|---|---|---|---|---|
| Pig Blue 15:2 | 7.3 | 15.6 | 15.6 | 15.6 | 15.6 |
| CD 4 | - | 1.88 | - | - | - |
| Disp 1 | - | - | 1.88 | - | - |
| Disp 5 | - | - | - | 1.88 | - |
| CD 1 | - | - | - | - | 1.88 |
| SYNOLAC 50W | 5.8 | - | - | - | - |
| White Spirit | 16.1 | 21.05 | 21.05 | 21.05 | 21.05 |
| First Stage Let-down Solution | | | | | |
| SYNOLAC 50W | - | 12.48 | 12.48 | 12.48 | 12.45 |
| White Spirit | - | 10.92 | 10.92 | 10.92 | 10.92 |
| Second Stage Let-down Solution | | | | | |
| SYNOLAC 50W | 91.5 | 195.5 | 195.5 | 195.5 | 195.5 |
| Mixed Driers | 7.3 | 15.6 | 15.6 | 15.6 | 15.6 |
| White Spirit | 18.0 | 38.5 | 38.5 | 38.5 | 38.5 |

Table 6

| Component | CE 17 | CE 18 | Ex 106 | Ex 107 | CE 19 |
|---|---|---|---|---|---|
| White Paint (weight) | CE 11 (8g) | CE 12 (8g) | Ex 101 (8g) | Ex 102 (8g) | CE 13 (8g) |
| Blue Paint (weight) | CE 14 (40g) | CE 15 (40g) | Ex 103 (40g) | Ex 104 (40g) | CE 16 (40g) |

A test panel was prepared for each of the paints identified in Tables 4 to 6 above and these were assessed for adhesion by a procedure broadly in accordance with British Standard Test BS 3900 : Part E6 (Cross-Cut Test).

Draw-down panels were prepared on tinplate panels using a 125 micron well applicator. The painted test panels were allowed to air-dry for 7 days before the cross-cut test procedure was carried out. Using a cutting tool, a matrix of 100 x 1 mm squares was cut in the paint film. Adhesion was assessed initially by gently brushing the surface of the paint panel and counting the number of squares that became detached from the panel. A more rigorous assessment was made by firmly pressing adhesive tape on to the matrix, removing it with a sharp pull and counting the number of squares that became detached from the panel. The results are reported in Table 7.

Table 7

| Paint | Number of squares becoming detached | |
|---|---|---|
| | On gentle brushing | With adhesive tape |
| CE 11 | 0 | 100 |
| CE 12 | 100 | 100 |
| Ex 102 | 0 | 90 |
| Ex 103 | 0 | 5 |
| CE 13 | 0 | 95 |
| CE 14 | 0 | 0 |
| CE 15 | 100 | 100 |
| Ex 104 | 0 | 75 |
| Ex 105 | 0 | 0 |
| CE 16 | 0 | 80 |
| CE 17 | 0 | 0 |
| CE 18 | 100 | 100 |
| Ex 106 | 0 | 0 |
| Ex 107 | 0 | 0 |
| CE 19 | 0 | 90 |

The good paint adhesion is indicated by a low number of paint squares that becoming detached. The results in Table 7 show that the paints in accordance with the present invention (Examples 102 to 107) are generally as effective in the adhesion test as the control paints (CE 11, 14 and 17) and superior to the comparative paints containing the closest known dispersants (CE 12, 13, 15, 16, 18 and 19).

Example 108 and Comparative Examples 20 and 21

The effect of a dispersing agent in accordance with the present invention in an industrial xylene-based paint system pigmented with titanium dioxide was evaluated. The medium oil alkyd resin used had the following constitution:

| | | |
|---|---|---|
| Phthalic Anhydride | 40% ) | |
| Fatty acid (linoleic) | 45% ( | 50% |
| Glycerol | 15% ) | |
| Xylene | | 50% |

It has an acid value of the solid portion of 15mg KOH/g, and is available as SYNOLAC 12X from Cray Valley Products Limited. Solutions of cobalt and lead driers (naphthenates) are added to give the following weights of metal on solid resin. Cobalt: 0.05% and Lead: 0.5%.

In Example 108 and Comparative Example 21 the pigment was dispersed in the solvent in the presence of the dispersant or comparative dispersant. In Comparative Example 20 the pigment was dispersed in the solvent in the presence of resin, in accordance with normal procedure in paint technology.

The paint formulations were prepared in a similar manner to those described in Examples 102 to 107 and Comparative Examples 11 to 19. The precise formulations are given in Table 8 all quantities being expressed in grams weight.

**Table 8**

| Component | CE 20 | CE 21 | Ex 108 |
|---|---|---|---|
| Millbase | | | |
| Pig White 6 | 40.0 | 75.80 | 75.80 |
| CD 2 | - | 1.14 | - |
| Disp 27 | - | - | 1.14 |
| SYNOLAC 12X | 8.4 | - | - |
| Xylene | 12.6 | 17.81 | 17.81 |
| First Stage Let-down Solution | | | |
| SYNOLAC 12X | - | 15.90 | 15.90 |
| Xylene | - | 4.95 | 4.95 |
| Second Stage Let-down Solution | | | |
| SYNOLAC 12X | 91.60 | 173.60 | 173.60 |
| Xylene | - | 17.90 | 17.90 |
| Cobalt Driers | 0.42 | 0.80 | 0.80 |
| Lead Driers | 1.04 | 1.97 | 1.97 |

A test panel was prepared on tinplate using a 125 micron well applicator for each of the paints identified in Table 8. The panels were allowed to air-dry for 7 days and then evaluated by the cross-cut test procedure in BS 3900: Part E6. Assessment is on a 0-5 scale in which 0 indicates the best adhesion to substrate, and 5 indicates the worst adhesion to substrate.

A more rigorous assessment was then made by firmly pressing adhesive tape on to the matrix, removing it with a sharp pull and counting the number of squares that become detached from the panel. Good paint adhesion is indicated by a low number of paint squares becoming detached. The results are reported in Table 9.

Table 9

| Paint | Assessment of adhesion on gentle brushing (0-5 Scale) | Number of squares becoming detached with adhesive tape |
|---|---|---|
| CE 20 | 0 | 0 |
| CE 21 | 5 | 100 |
| Ex 108 | 0 | 0 |

The results in Table 9 show that a paint made in accordance with the present invention (Example 108) is generally as effective in the adhesion test as the control paint (CE 20) and superior to the comparative paint containing a known dispersant (CE 21).

Examples 109 to 113 and Comparative Examples 22 to 27

Further examples of paints prepared using dispersing agents prepared in accordance with the present invention, and comparative examples of paints prepared using dispersing agents that are outside the scope of the present invention are reported in Tables 10 and 11. A control paint free from dispersing agent is also included. These paint formulations were prepared in a similar manner to those described in Examples 102 to 107 and Comparative Examples 11 to 19.

Table 10

| Component | CE 22 | CE 23 | CE 24 | Ex 109 | Ex 110 |
|---|---|---|---|---|---|
| Millbase | | | | | |
| Pig White 6 | 35.0 | 47.42 | 47.42 | 47.42 | 47.42 |
| CD 7 | - | 0.63 | - | - | - |
| CD10 | - | - | 0.63 | - | - |
| Disp 12 | - | - | - | 0.63 | - |
| Disp 28 | - | - | - | - | 0.63 |
| SYNOLAC 50W | 5.0 | - | - | - | - |
| White Spirit | 13.8 | 15.17 | 15.17 | 15.17 | 15.17 |
| First Stage Let-down Solution | | | | | |
| SYNOLAC 50W | - | 6.81 | 6.81 | 6.81 | 6.81 |
| White Spirit | - | 2.92 | 2.92 | 2.92 | 2.92 |
| Second Stage Let-down Solution | | | | | |
| SYNOLAC 50W | 53.3 | 72.22 | 72.22 | 72.22 | 72.22 |
| Mixed Driers | 4.4 | 5.92 | 5.92 | 5.92 | 5.92 |
| White Spirit | 5.17 | 6.98 | 6.98 | 6.98 | 6.98 |

Table 11

| Component Millbase | CE 25 | CE 26 | Ex 111 | Ex 112 | Ex 113 | CE 27 |
|---|---|---|---|---|---|---|
| Pig White 6 | 56.15 | 56.15 | 56.15 | 56.15 | 47.42 | 47.43 |
| CD 5 | 0.7 | - | - | - | - | - |
| CD 6 | - | 0.7 | - | - | - | - |
| Disp 1 | - | - | 0.7 | - | - | - |
| Disp 9 | - | - | - | 0.7 | - | - |
| Disp 43 | - | - | - | - | 0.95 | - |
| CD 8 | - | - | - | - | - | 0.95 |
| White Spirit | 13.34 | 13.34 | 13.34 | 13.34 | 14.85 | 14.85 |
| First Stage Let-down Solution | | | | | | |
| SYNOLAC 50W | 8.04 | 8.04 | 8.04 | 8.04 | 6.81 | 6.81 |
| White Spirit | 8.08 | 8.08 | 8.08 | 8.08 | 2.92 | 2.92 |
| Second Stage Let-down Solution | | | | | | |
| SYNOLAC 50W | 85.51 | 85.51 | 85.51 | 85.51 | 72.22 | 72.22 |
| Mixed Driers | 7.1 | 7.1 | 7.1 | 7.1 | 5.92 | 5.92 |
| White Spirit | 8.35 | 8.35 | 8.35 | 8.35 | 6.98 | 6.98 |

A test panel was prepared on tinplate using a 75 micron well applicator for each of the paints identified in Table 10. The panels were allowed to air-dry for 7 days and then evaluated and assessed in the same way as described in Example 10 and Comparative Examples 20 and 21. The results are reported in Table 12.

Table 12

| Paint | Assessment of adhesion on gentle brushing (0-5 Scale) | Number of squares becoming detached with adhesive tape |
|---|---|---|
| CE 22 | 1-2 | 25 |
| CE 23 | 2 | 50 |
| CE 24 | 1-2 | 40 |
| Ex 109 | 1-2 | 0 |
| Ex 110 | 1-2 | 0 |
| CE 25 | 4-5 | 100 |
| CE 26 | 4-5 | 100 |
| Ex 111 | 1-2 | 100 |
| Ex 112 | 1-2 | 100 |
| Ex 113 | 0-1 | 0 |
| CE 27 | 2-3 | 100 |

The results in Table 12 show that a paint made using a dispersant in accordance with the present invention is superior to a paint made using an otherwise similar dispersant that does not carry a terminal group containing at least two aliphatic carbon-carbon double bonds.

Example 114

A mixture of 12.4g of Dispersant 6 and 36g of a commercial grade of 3-octadecylaminopropylamine (DUOMEEN T, supplied by AKZO, DUOMEEN is a trade mark) was stirred and heated at 160-170°C for 8 hours under a stream of inert gas. The product, a viscous liquid hereinafter called Dispersant 46, had an equivalent weight with respect to basic nitrogen of 1942 and is a mixture of compounds of the formulae:

$$Y - CO -[O - A - CO]_n - NH -(CH_2)_3 - NH - C_{18}H_{37}$$

and

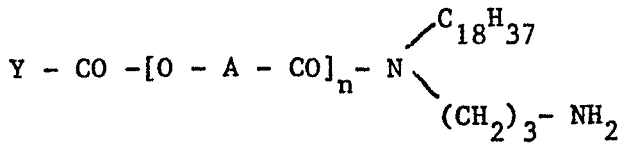

wherein Y is mainly 8,11-heptadecadien-1-yl;

A is 11-(n-hexyl)-n-undec-8,9-en-1,11-ylene;

and n is about 3.2.

Coloured Acid 1 (CA 1)

This is copper phthalocyanine (CuPc) sulphonic acid having, on average, 1.3 sulphonic acid groups per CuPc nucleus. It has an equivalent weight with respect to acid of 523.

Examples 115 to 118

The dispersions having the formulations described in Table 13, were prepared by ball milling the ingredients for 16 hours. All the resulting dispersions were fluid, deflocculated and with pigment particles having a mean diameter below 5 microns.

Table 13

| Example | CI Pigment or Filler & Amount in g | Dispersant & Amount in g | Fluidising Agent or Coloured Acid & Amount in g | Org Liq & Amount in g |
|---|---|---|---|---|
| 115 | Barytes/8 | Disp 7/0.16 | - | WS/1.84 |
| 116 | Talc/5 | Disp 28/0.25 | - | WS/4.75 |
| 117 | $CaCO_3$/8 | Disp 7/0.16 | - | WS/1.84 |
| 118 | Blue 15:3/2 | Disp 27/0.4 | CA 1/0.2 | WS/7.4 |

Dispersant 27 has an equivalent weight with respect to basic nitrogen of 1036.

## CLAIMS

1. An ester or an oligo- or poly-ester compound of the formula:

$$Y - X \qquad I$$

wherein Y is a group containing at least two aliphatic carbon-carbon double bonds; and

X is (i) the radical of a hydroxy aliphatic carboxylic acid attached to Y through the oxygen atom of the hydroxy group or the carbon atom of the carboxy group or (ii) the radical of an oligoester or a polyester derived from one or more hydroxy aliphatic carboxylic acids attached to Y through the oxygen atom of a terminal hydroxy group or the carbon atom of a terminal carboxylic acid group, each of (i) and (ii) also having an acidic or a basic amino group, or the salt thereof with a counterion.

2. A compound according to Claim 1 wherein X is of the formula:

$$- CO -[O - A - CO]_n - J \qquad IIa$$

wherein A is a divalent aliphatic radical;

Y is an optionally substituted group containing at least two aliphatic carbon-carbon double bonds;

n is an integer from 1 to 100; and

J is (a) -OM wherein M is H, $NH_4$, substituted ammonium or a metal, or (b) - Z - R, wherein Z is a divalent bridging group and R is (i) an amino group or the salt thereof with an acid or (ii) sulphonate, phosphonate, sulphate or phosphate;

3. A compound according to Claim 1 wherein Y - X is of the formula:

$$(Y - O - [CO - A - O]_n)_m - J^1 \qquad IIb$$

wherein A and n are as defined in Claim 2;

m is 1 or 2;

and $J^1$ is phosphonate or sulphonate, in the free acid form or as a metal or ammonium salt.

4. A compound according to any one of Claims 1 to 3 wherein Y is a alkadienyl or alkatrienyl group containing from 8 to 25 carbon atoms.

5. A compound according to Claim 2 or Claim 3 wherein A is alkylene or alkenylene containing from 4 to 25 carbon atoms with at least 4 carbon atoms between the oxygen atom and the carbonyl group.

6. A compound according to Claim 5 wherein A contains at least 9 carbon atoms and n is from 1 to 10.

7. A compound according to Claim 6 wherein A is alkenylene.

8. A compound according to Claim 5 wherein A contains up to 8 carbon atoms and n is from 1 to 60.

9. A compound according to Claim 2 wherein Z - R is of the formula:

$-NQ-L-R$, 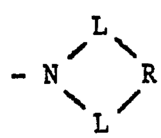 or $-O-L-R$

wherein Q is $C_{1-25}$-alkyl;

L is $C_{2-6}$-alkylene or $C_{2-6}$-hydroxyalkylene; and

R is 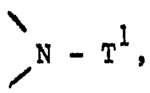, 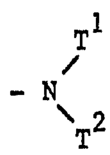, or 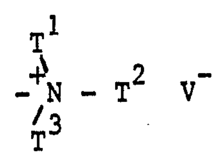

wherein

$T^1$, $T^2$ & $T^3$ are each independently selected from H, $C_{1-25}$-alkyl and $C_{4-8}$-cycloalkyl; and

$V^-$ is an anion.

10. A compound according to Claim 2 wherein J is a polyalkyleneimine (PAI) radical linked to the carbonyl group through a nitrogen atom in the PAI.

11. A dispersible composition comprising a solid and a compound according to any one of Claims 1 to 10.

12. A dispersion of a solid in an organic liquid containing a compound according to any one of Claims 1 to 10.

European Patent Office

# EUROPEAN SEARCH REPORT

0233684

Application number

EP 87 30 0105

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 164 817 (I.C.I.)<br>* Abstract; claims; pages 6-14 * | 1-9,11,12 | B 01 F 17/00<br>C 09 D 17/00 |
| Y | | 10 | |
| Y | EP-A-0 127 325 (I.C.I.)<br>* Claims; abstract; pages 6,7,12 * | 10 | |
| A | | 1-9,11,12 | |
| X | US-A-4 415 705 (HUTTER)<br>* Whole document * | 1-12 | |

TECHNICAL FIELDS SEARCHED (Int Cl 4)

B 01 F

The present search report has been drawn up for all claims

| Place of search | Date of completion of the search | Examiner |
|---|---|---|
| THE HAGUE | 19-05-1987 | DE LA MORINERIE B.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document